(19) Europäisches Patentamt
European Patent Office
Office européen des brevets

(11) Veröffentlichungsnummer: **0 167 199**
**B1**

(12) **EUROPÄISCHE PATENTSCHRIFT**

(45) Veröffentlichungstag der Patentschrift: **25.01.89**

(51) Int. Cl.4: **C 03 C 25/02,** C 08 F 299/06

(21) Anmeldenummer: **85200966.1**

(22) Anmeldetag: **19.06.85**

(54) **Optische Glasfaser mit einer Kunststoffbedeckung und Verfahren zum Herstellen derselben.**

(30) Priorität: **22.06.84 NL 8401981**

(43) Veröffentlichungstag der Anmeldung: **08.01.86 Patentblatt 86/2**

(45) Bekanntmachung des Hinweises auf die Patenterteilung: **25.01.89 Patentblatt 89/4**

(84) Benannte Vertragsstaaten: **DE FR GB IT NL SE**

(56) Entgegenhaltungen:
**EP-A-0 104 057**
**EP-A-0 114 982**
**EP-A-0 125 710**
**FR-A-2 359 186**
**US-A-4 324 575**

(73) Patentinhaber: **N.V. Philips' Gloeilampenfabrieken, Groenewoudseweg 1, NL- 5621 BA Eindhoven (NL)**

(72) Erfinder: **Broer, Dirk Jan, c/o INT. OCTROOIBUREAU B.V. Prof. Holstlaan 6, NL-5656 AA Eindhoven (NL)**
Erfinder: **Mol, Grietje Neeltje, c/o INT. OCTROOIBUREAU B.V. Prof. Holstlaan 6, NL-5656 AA Eindhoven (NL)**

(74) Vertreter: **Auwerda, Cornelis Petrus, INTERNATIONAAL OCTROOIBUREAU B.V. Prof. Holstlaan 6, NL- 5656 AA Eindhoven (NL)**

**EP 0 167 199 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung bezieht sich auf eine optische Glasfaser mit einer Kunststoffbedeckung, mit einer Glasfaser und einer umhüllenden Schicht aus einem Kunstgummi, wobei das Kunstgummi aus einer härtbaren Kunststoffzusammensetzung gebildet ist, die ein oligomeres Urethanakrylat und ein niederviskoses monomeres Akrylat aufweist. Die Erfindung bezieht sich ebenfalls auf ein Verfahren zum Herstellen einer optischen Glasfaser mit einer Kunststoffbedeckung, wobei eine Glasfaser unmittelbar nach der Bildung mit einer Schicht aus einer härtbaren Kunststoffzusammensetzung umhüllt wird, die daraufhin durch Bestrahlung mit Licht oder Elektronen zum Aushärten gebracht wird.

Eine derartige optische Glasfaser und ein Verfahren zum Herstellen derselben sind in der US-Patentschrift Nr. 4 324 575 beschrieben. Dabei wird eine härtbare Kunststoffzusammensetzung verwendet, die ein oligomeres Harz aufweist, das ein Kondensationsprodukt aus Polypropylenglykol und zwei Einheiten eines O-hydroxyerhylakrylat-N-C-aliphatischen Urethans ist. Der Polypropylenglykol enthält 12 bis 80 monomere Einheiten. Die härtbare Kunststoffzusammensetzung weist weiterhin ein Polyalkylglykoldimethakrylat auf und kann 0 bis 15 Gew.-% eines difunktionellen oder trifunktionellen monomeren Akrylats aufweisen, d. h. Verbindungen mit zwei oder drei Akrylatestergruppen je Molekül. Die härtbare Kunststoffzusammensetzung enthält ausserdem einen Photoinitiator und wird durch Bestrahlung mit UV-Licht zum Aushärten gebracht, wobei ein Kunstgummi mit einer Glasübergangstemperatur zwischen -40 und +90°C gebildet wird. Die härtbare Kunststoffzusammensetzung enthält keine Lösungsmittel.

Härtbare Kunststoffzusammensetzungen, wie obenstehend beschrieben, werden zum Anbringen einer ersten weichen Bedeckung (Elastizitätsmodul 1 bis 10 MPa) auf einer Glasfaser für optische Übertragungszwecke verwendet. Durch Zusammenwirken mit einer zweiten harten Bedeckung (Elastizitätsmodul über 100 MPa) wird dann eine Glasfaser mit einer grossen Festigkeit und einer geringen Mikrobiegeempfindlichkeit, gebildet, so dass die Übertragungsverluste durch mechanische Verformung der Glasfaser gering sind.

Die Erfindung hat die Aufgabe, eine optische Glasfaser mir einer Kunststoffbedeckung mit einer sehr niedrigen Glasübergangstemperatur, beispielsweise -50°C oder niedriger zu schaffen. Nun ist es zwar bekannt, dass eine niedrige Glasübergangstemperatur durch Verwendung eines oligomeren Urethanakrylats mit einem hohen Molekulargewicht erhalten werden kann; wenn aber keine weiteren Massnahmen getroffen werden, geht dies mit einer unerwünschr niedrigen Brechzahl und einer unerwünscht hohen Viskosität der härtbaren Kunststoffzusammensetzung einher. Die Kunststoffbedeckung muss eine Brechzahl aufweisen, die höher als die der äusseren Schicht der Glasfaser ist. Es ist vorteilhaft, dass die härtbare Kunststoffzusammensetzung eine Brechzahl hat, die um soviel grösser als die der Glasfaser ist, dass eine visuelle Überprüfung der zentralen Lage der Glasfaser in der Kunststoffbedeckung möglich ist. Wenn diese Bedingungen erfüllt sind, darf die Viskosität der härtbaren Kunststoffzusammensetzung bei der Anbringtemperatur nicht zu gross sein, weil in dem Fall, dass die Viskosität gross ist, bei der gewünschten hohen Bedeckungsgeschwindigkeit keine glatte Schicht auf der Glasfaser gebildet werden kann.

Die Erfindung hat weiterhin die Aufgabe, ein Verfahren zu schaffen, bei dem eine Bedeckungsgeschwindigkeit der Glasfaser erreicht wird, die grösser als 5m/s ist, ohne dass die erforderliche Vorrichtung unwirtschaftlich gross bemessen ist.

Die obengenannte Aufgabe wird nach der Erfindung durch eine optische Glasfaser mit einer Kunststoffbedeckung gelöst, die aus einer härtbaren Kunststoffzusammensetzung gebildet ist, die 50 bis 95 Gew.-% eines oligomeren Urethanakrylats und 5 bis 50 Gew.-% eines oder mehrerer niederviskosen monomeren Akrylate umfasst, wobei das oligomere Urethanakrylat ein Polyurethanakrylat mit einem mittleren Molekulargewicht über 3000 und mit der folgenden Strukturformel ist:

$$CH_2=CH-\underset{\underset{O}{\|}}{C}-O-R_3-\underset{\underset{O}{\|}}{C}-NH-R_2-NH-\underset{\underset{O}{\|}}{C}-O-R_1-\underset{\underset{O}{\|}}{C}-NH-R_2-NH-\underset{\underset{O}{\|}}{C}-O-R_3-\underset{\underset{O}{\|}}{C}-CH=CH_2$$

worin $R_1$ aus der Gruppe gewählt ist, die durch Polyätherketten und Polyesterketten mit einem mittleren Molekulargewicht über 2500 gebildel ist, worin $R_2$ ein zweiwertiger Rest eines Diisozyanats isr und worin $R_3$ einen zweiwertigen Rest eines organischen Dialkohols darstellt, wobei die niederviskosen monomeren Akrylate aus Verbindungen mit nur einer Akrylatestergruppe je Molekül gewählt sind.

Vorzugsweise ist $R_1$ aus der Gruppe gewählt die durch

$$-(CH_2-CH_2-O)_n-,\quad -(CH_2-\underset{\underset{CH_3}{|}}{CH}-O)_n-,\quad -(CH_2-CH_2-CH_2-CH_2-O)_n-$$

und

$$-CH_2-CH_2-O-\left[\underset{\underset{O}{\|}}{C}-(CH_2)_4-\underset{\underset{O}{\|}}{C}-O-CH_2-CH_2-O\right]_m-$$

gebildet wird, worin n im Durchschnitt grösser als 90 ist und worin m im Durchschnitt grösser als 30 ist.

Die Kristallisierungsneigung der ausgehärteren Kunststoffzusammensetzung ist besonders gering, wenn $R_1$ eine Polyisopropyletherkette ist.

Bei einer geeigneten Zusammensetzung der härtbaren Kunststoffzusammensetzung ist $R_2$ aus der Gruppe gewählt die durch

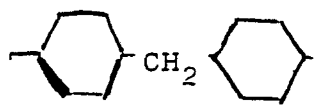 und 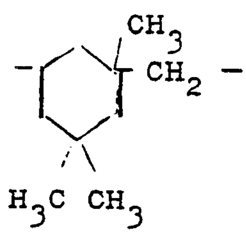

gebildet wird.

Eine niedrige Glasübergangstemperatur und eine hohe Brechzahl des Kunstgummis nach dem Aushärten der Kunststoffzusammensetzung werden erreicht, wenn $R_2$ aus der Gruppe gewählt ist, die durch

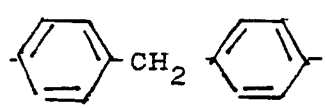 und 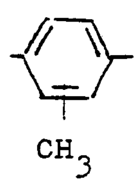

gebildet ist.

Bei einer bevorzugten Zusammensetzung der härtbaren Kunststoffzusammensetzung ist $R_3$ aus der Gruppe gewählt, die durch:

$$-(CH_2-CH_2-O)_p- \quad \text{und} \quad -(CH_2-\underset{CH_3}{CH}-O)_p-$$

gebildet ist, worin p mindestens 1 ist.

Damir die härtbare Kunststoffzusammensetzung eine geeignete Viskosität und eine hohe Aushärtegeschwindigkeit hat, werden ein oder mehrere niederviskose monomere Akrylate verwendet. Vorzugsweise sind diese aus der Gruppe gewählt, die durch 2-Ethoxy-ethylakrylat, 2'-Ethoxy-2-ethoxy-ethylakrylat, 3-Methoxy-propylakrylat, Butylakrylat, Pentylakrylat, Hexylakrylat, Heptylakrylat, Octylakrylat, Nonylakrylat, 2-Ethyl-hexylakrylar, 2-Phenoxy-ethylakrylat und 2'-(2-Oxybenzophenon)-2-ethoxy-ethylakrylat gebildet wird.

Die härtbare Kunststoffzusammensetzung kann durch Bestrahlung mit Elektronen zum Aushärten gebracht werden, beispielsweise durch Verwendung einer Electrocurtain-Anlare (Erzeugnis von Energy Sciences Inc., Woburn, Massachusetts). Es ist jedoch auch möglich, die härtbare Kunststoffzusammensetzung unter dem Einfluss von UV-Licht zum Aushärten zu bringen. In diesem Fall ist es erwünscht, dass die härtbare Kunststoffzusammensetzung ausserdem 0,1 bis 10 Gew.-% eines durch Licht aktivierbaren Initiators aufweist. Vorzugsweise ist der durch Licht aktivierbare Initiator aus der Gruppe gewählt, die durch 2,2-Dimethoxy-2-phenyl-azetophenon, 2,2,-Diethoxy-azetophenon, 2,2-Dimethyl-2-hydroxy-acetophenon und 2'-(2-Oxybenzophenon)-2-ethoxy-ethyl-akrylat gebildet wird. Die letztgenannte Verbindung kann daher gleichzeitig als verdünnendes monomeres Akrylat und als lichtempfindlicher Initiator verwendet werden.

Um die Aushärtegeschwindigkeit des durch das Aushärten gebildeten Kunstgummis zu vergrössern, ist es zweckmässig, dass die härtbare Kunststoffzusammensetzung bis 20 Gew.-% einer oder mehrerer monomerer mehrfacher Akrylatverbindungen aufweist. Vorzugsweise werden diese monomeren mehrfachen Akrylatverbindungen aus der Gruppe gewählt, die durch Hexandioldiakrylat, Trimethylolpropantriakrylat und Tripropylenglykoldiakrylat gebildet wird.

Die Aufgabe, ein verbessertes Verfahren zu schaffen, wird nach der Erfindung durch ein Verfahren gelöst, bei dem eine härtbare Kunststoffzusammensetzung, wie obenstehend beschrieben, auf der Glasfaser angebracht wird, wobei die Kunststoffzusammensetzung daraufhin durch Bestrahlung von weniger als 0,5 Sekunden Dauer zum Aushärten gebracht wird.

Die Erfindung wird im folgenden durch Ausführungsbeispiele, durch Vergleichsbeispiele und anhand einer Zeichnung näher beschrieben. Es zeigen

Fig. 1 einen Schnitt durch eine Ausführungsform einer Glasfaser mit Kunststoffbedeckung,

Fig. 2 und 3 Srrukturformeln von Ausführungsformen von Polyetherurethanakrylaten zur Verwendung in einer härtbaren Kunststoffzusammensetzung zum Herstellen einer Kunststoffbedeckung auf einer optischen Glasfaser und

Fig. 4 die Strukturformel von 2'-(2-Oxybenzophenon)-2-ethoxy-ethylakrylat.

Eine Glasfaser wird auf bekannte Weise durch Ziehen aus einer Vorform gebildet. Fig. 1 zeigt einen Schnitt durch eine Glasfaser mit einem Kernglas 1 und einem Mantelglas 2 mit unterschiedlichen Brechzahlen. Die Kunststoffbedeckung und das Verfahren nach der Erfindung können auch bei Glasfasern angewandt werden, die mit dem Doppeltiegelverfahren gebildet sind, und statt eines gestuften Brechzahlverlaufes kann es auch eine kontinuierlich verlaufende Brechzahl geben. Die in Fig. 1 dargestellte Glasfaser hat einen kreisförmigen Querschnitt, aber dieser kann auch jede beliebige andere Form aufweisen, beispielsweise elliptisch oder quadratisch. Unmittelbar nach dem Bilden der Glasfaser wird darauf eine Schicht aus einer härtbaren Kunststoffzusammensetzung angebracht, die daraufhin unter Bildung einer Schicht aus einem Kunstgummi 3 ausgehärtet wird.

Eine Anzahl härtbarer Kunststoffzusammensetzungen wurde bereitet, wie in der Tabelle angegeben. Die Zusammensetzungen 1 bis 5 sind Zusammensetzungen nach der Erfindung, die Zusammensetzungen VI und VII sind Vergleichszusammensetzungen nicht nach der Erfindung.

Die Komponente A ist ein Polyetherurethanakrylat wie obenstehend beschrieben, worin $R_1$ eine Polyisopropylethergruppe ist, worin n im Schnitt 96 ist, worin $R_2$ der folgende zweiwertige Rest ist:

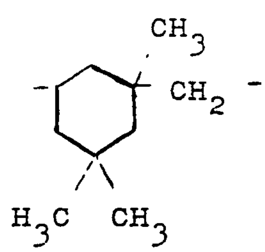

und worin $R_3$ die Gruppe $-(CH_2-CH_2-O)-$ isr, siehe Fig. 2.

Die Komponente B ist ein Polyetherurethanakrylat wie obensrehend beschrieben, worin $R_1$ eine Polyisopropylethergruppe ist, worin n im Schnitt 120 ist, worin $R_2$ der folgende zweiwertige Rest ist:

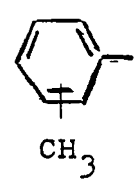

worin die Bezeichnung der Methylgruppe bedeutet, dass diese an einer beliebigen Stelle mit dem Phenylring verbunden ist und worin $R_3$ die Gruppe $-(CH_2-CH_2-O)-$ ist, siehe Fig. 3.

Die Bezeichnung EEEA in der Tabelle steht für 2'-Ethoxy-2-ethoxy-ethylakrylat, PEA steht für 2-Phenoxy-ethylakrylat und TPGDA steht für Tripropylenglykoldiakrylat. Der verwendete lichtempfindliche Initiator ist 2,2-Dimethoxy-2-phenyl-acetophenon. Die Anbringungstemperatur ist derart gewählt worden, dass die Viskosität der härtbaren Kunststoffzusammensetzung bei dieser Temperatur zwischen 2 und 3 Pa.s liegt. Die Anbringungstemperatur ist vorzugsweise niedriger als 60°C, damit ein vorzeitiges Aushärten der härtbaren Kunststoffzusammensetzung vermieden wird.

| | nach der Erfindundung | | | | | nicht nach der Erfindung | |
|---|---|---|---|---|---|---|---|
| Zusammensetzung Nr. | 1 | 2 | 3 | 4 | 5 | VI | VII |
| Komponente A (Gew.-%) | 77 | 77 | 77 | - | - | 96 | - |
| Komponente B (Gew.-%) | - | - | - | 77 | 77 | - | 96 |
| EEEA (Gew.-%) | 19 | - | - | 19 | - | - | - |
| PEA (Gew.-%) | - | 19 | 9,5 | - | 19 | - | - |
| TPGD (Gew.-%) | - | - | 9,5 | - | - | - | - |
| Initiator (Gew.-%) | 4 | 4 | 4 | 4 | 4 | 4 | 4 |
| Viskosität bei 25°C (Pa.s) | 3,8 | 7,6 | 8,0 | 8,7 | 17,7 | 38,5 | 75,0 |
| Anbringungstemperatur (°C) | 31 | 43 | 42 | 53 | 59 | 66 | 86 |
| Aushärtezeit (s) | 0,12 | 0,50 | 0,06 | 0,50 | 0,60 | 0,12 | 0,50 |
| Glasübergangstemp. (°C) | -56 | -56 | -52 | -62 | -59 | -52 | -62 |
| Brechzahl ($n_D^{25}$) | 1,469 | 1,485 | 1,479 | 1,468 | 1,484 | 1,469 | 1,469 |
| Elastizitätsmodul (MPa) | 2,5 | 3,4 | 1,0 | 1,3 | 1,5 | 2,5 | 1,4 |

Die Tabelle zeigt, dass die Glasübergangstemperatur und die Brechzahl durch das Vorhandensein niederviskoser monomerer Akrylate kaum beeinflusst werden, dass aber die Viskosität davor stark abhängig ist. Die Zusammenzetaungen VI und VII können nur bei einer Temperatur über 60°C auf einer Glasfaser angebracht werden, was unerwünscht ist. Die Brechzahl ist von dem gewählten monomeren Akrylat abhängig. Die Glasübergangstemperatur ist vorallem von der Zusammensetzung und von dem Molekulargewicht des Polyetherurethanakrylats abhängig.

Eine besonders schnell aushärtende härtbare Kunststoffzusammensetzung wird erhalten mit der folgenden Formulierung: 86 Gew.-% der Komponente A (Fig. 2), 10 Gew.-% EEEA, 2 Gew.-% 2,2-Dimethoxy-2-phenyl-azetophenon und 2 Gew.-% 2'-(2-Oxybenzophenon)-2-ethoxy-ethylakrylat (Fig. 4). Die Viskosität dieser Formulierung bei 25°C beträgt 10 Pa.s, bei 45°C ist sie 3,1 Pa.s. Die härtbare Zusammensetzung wird bei 45°C auf einer Glasfaser angebracht. Eine geeignete Schichtdicke auf einer Glasfaser mit einem Durchmesser von 125 µm ist beispielsweise 30 µm. Die härtbare Kunststoffzusammensetzung wird durch Bestrahlung von 0,06 s Dauer mit einer Mitteldruckquecksilberdampfentladungslampe in einem Abstand von 20 cm ausgehärtet. Die Glasübergangstemperatur des gebildeten Kunstgummis beträgt -50°C.

**Patentansprüche**

1. Optische Glasfaser mit einer Kunststoffbedeckung, mit einer Glasfaser und einer umhüllenden Schicht aus einem Kunstgummi, wobei das Kunstgummi aus einer härtbaren Kunststoffzusammensetzung gebildet ist, die ein oligomeres Urethanakrylat und ein niederviskoses monomeres Akrylat aufweist, dadurch gekennzeichnet, dass die härtbare Kunststoffzusammensetzung 50 bis 95 Gew.-% eines oligomeren Urethanakrylats und 5 bis 50 Gew.-% eines oder mehrerer niederviskoser monomerer Akrylate umfasst, wobei das oligomere Urethanakrylat ein Polyurethanakrylat mit einem mittleren Molekulargewicht über 3000 und mit der folgenden Strukturformel ist:

$$CH_2{=}CH-\underset{\underset{O}{\|}}{C}-O-R_3-\underset{\underset{O}{\|}}{C}-NH-R_2-NH-\underset{\underset{O}{\|}}{C}-O-R_1-\underset{\underset{O}{\|}}{C}-NH-R_2-NH-\underset{\underset{O}{\|}}{C}-O-R_3-\underset{\underset{O}{\|}}{C}-CH{=}CH_2$$

worin $R_1$ aus der Gruppe gewählt ist, die durch Polyetherketten und Polyesterketten mit einem mittleren Molekulargewicht über 2500 gebildet ist, worin $R_2$ ein zweiwertiger Rest eines Diisocyanats ist und worin $R_3$ einen zweiwertigen Rest eines organischen Dialkohols darstellt, wobei die niederviskosen monomeren Akrylate aus Verbindungen mit nur einer Akrylatestergruppe je Molekül gewählt sind.

2. Optische Glasfaser nach Anspruch 1, dadurch gekennzeichnet, dass $R_1$ aus der Gruppe gewählt ist die durch

$$-(CH_2-CH_2-O)_n-,\quad -(CH_2-\underset{\underset{CH_3}{|}}{CH}-O)_n-,\quad -(CH_2-CH_2-CH_2-CH_2-O)_n-$$

und

$$-CH_2-CH_2-O-\left[-\underset{\underset{O}{\|}}{C}-(CH_2)_4-\underset{\underset{O}{\|}}{C}-O-CH_2-CH_2-O-\right]_m$$

umd gebildet wird, worin n im Durchschnitt grösser als 90 ist und m im Durchschnitt grösser als 30 ist.

3. Optische Glasfaser nach Anspruch 1 oder 2, dadurch gekennzeichnet, dass $R_2$ aus der Gruppe gewählt ist, die durch

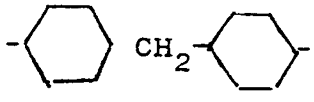

und

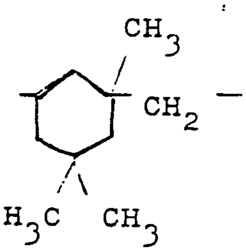

gebildet wird.

4. Optische Glasfaser nach Anspruch 1 oder 2, dadurch gekennzeichnet, dass $R_2$ aus der Gruppe gewählt ist, die durch

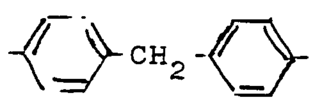

und

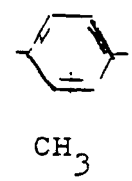

gebildet ist.

5. Optische Glasfaser nach einem der Ansprüche 1 bis 4, dadurch gekennzeichnet, dass $R_3$ aus der Gruppe, die gewählt ist die durch

$$-(CH_2-CH_2-O)_p- \quad \text{und} \quad -(CH_2-\underset{CH_3}{\underset{|}{CH}}-O)_p-$$

gebildet ist, worin p mindestens 1 ist.

6. Optische Glasfaser nach einem der Ansprüche 1 bis 5, dadurch gekennzeichnet, dass die niederviskosen monomeren Akrylate aus der Gruppe gewählt sind, die durch 2-Ethoxy-ethylakrylat, 2'-Ethoxy-2-ethoxy-ethylakrylat, 3-Methoxy-propylakrylat, Butylakrylat, Pentylakrylat, Hexylakrylat, Heptylakrylat, Octylakrylat, Nonylakrylat, 2-Ethyl-hexylakrylat, 2-Phentoxy-ethylakrylat und 2'-(2-Oxybenzophenon)-2-ethoxy-ethylakrylat gebildet wird.

7. Optische Glasfaser nach einem der Ansprüche 1 bis 6, dadurch gekennzeichnet, dass die härtbare Kunststoffzusammensetzung ausserdem 0,1 bis 10 Gew.-% eines durch Licht aktivierbaren Initiators aufweist.

8. Optische Glasfaser nach Anspruch 7, dadurch gekennzeichnet, dass der durch Licht aktivierbare Initiator aus der Gruppe gewählt ist, die durch 2,2-Dimethoxy-2-phenyl-Acetophenon, 2,2-Diethoxy-acetophenon, 2,2-Dimethyl-2-hydroxy-acetophenon und 2'-(2-Oxybenzophenon)-2-ethoxy-ethylakrylat gebildet ist.

9. Optische Glasfaser nach einem der Ansprüche 1 bis 8, dadurch gekennzeichnet, dass die härtbare Kunststoffzusammensetzung bis 20 Gew.-% einer oder mehrerer monomerer mehrfacher Akrylatverbindungen aufweist.

10. Optische Glasfaser nach Anspruch 9, dadurch gekennzeichnet, dass die monomeren mehrfachen Akrylatverbindungen aus der Gruppe gewählt sind, die durch Hexandioldiakrylat, Trimethylolpropantriakrylat und Tripropylenglykoldiakrylat gebildet ist.

11. Verfahren zum Herstellen einer optischen Glasfaser mit einer gehärteten Kunststoffbedeckung, wobei eine Glasfaser unmittelbar nath der Bildung mit einer Schicht aus einer härtbaren Kunsstoffzusammensetzung umhüllt wird, die daraufhin durch Bestahlung mit Licht oder Elektronen zum Aushärten gebracht wird, dadurch gekennzeichnet, dass eine härtbare Kunstoffzusammensetzung nach einem der Ansprüche 1 bis 10 auf der Glasfaser angebracht wird, wobei die härtbare Kunstoffzusammensetzung daraufhin durch Bestrahlung von weniger als 0,5 Sekunden Dauer zum Aushärten gebracht wird.

**Claims**

1. An optical glass fibre having a synthetic resin coating, comprising a glass fibre and an enveloping layer of a synthetic rubber formed from a curable synthetic resin composition which comprises an oligomeric urethane acrylate and a monomeric acrylate of low viscosity, characterized in that the curable synthetic resin composition comprises from 50 to 95 % by weight of an oligomeric urethane acrylate and from 5 to 50 % by weight of one or more monomeric acrylates of low viscosity, the oligomeric urethane acrylate being a polyethane acrylate having a number-averaged molecular weight in excess 3000, of the following structural formula:

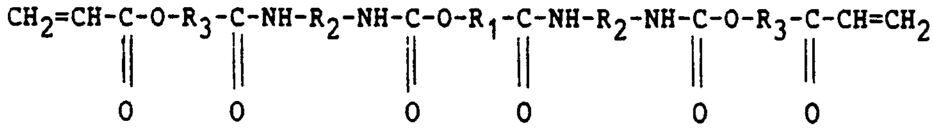

wherein $R^1$ is selected from the group formed by polyether chains and polyester chains having a number-averaged molecular weight in excess of 2500, wherein $R_2$ is a bivalent radical of diisocyanate, and wherein $R_3$ is a bivalent radical of dihydric alcohol, the monomeric acrylates of low viscosity being selected from compounds having only one acrylate-ester group per molecule.

2. An optical glass fibre as claimed in claim 1, characterized in that $R_1$ is selected form the group formed by:

$-(CH_2-CH_2-O)_n-$, 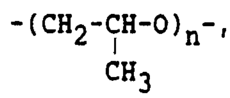, $-(CH_2-CH_2-CH_2-CH_2-O)_n-$

and

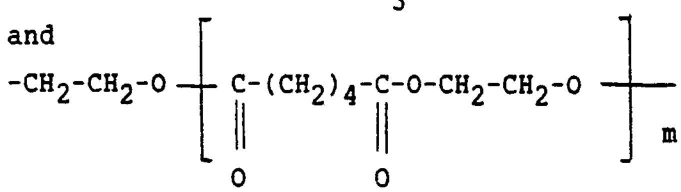

wherein the average value of n exceeds 90 and wherein the average value of m exceeds 30.

3. An optical glass fibre as claimed in Claim 1 or 2, characterized in that $R_2$ is selected from the group formed by:

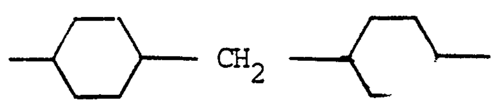 and 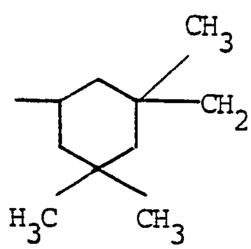

4. An optical glass fibre as claimed in Claim 1 or 2, characterized in that $R_2$ is selected from the group formed by:

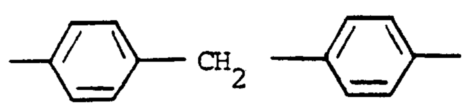 and 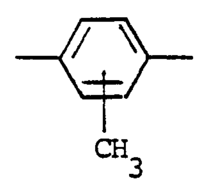

5. An optical glass fibre as claimed in any one of the Claims 1 to 4, characterized in that $R_3$ is selected from the group formed by:

$-(CH_2-CH_2-O)_p-$ and 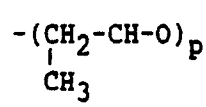

wherein p is at least 1.

6. An optical glass fibre as claimed in any one of the Claims 1 to 5, characterized in that the monomeric acrylates of low viscosity are selected from the group formed by 2-ethoxy-ethyl acrylate, 2-ethoxy-2-ethoxy-ethyl acrylate, 3-methoxy-propyl acrylate, butyl acrylate, pentyl acrylate, hexyl acrylate, heptyl acrylate, octyl acrylate, nonyl acrylate, 2-ethyl-hexyl acrylate, 2-phenoxy-ethyl acrylate and 2'-(2-oxybenzophenone)-2-ethoxy-ethyl acrylate.

7. An optical glass fibre as claimed in any one of Claims 1 to 6, characterized in that the curable synthetic resin composition also contains 0.1 to 10 % by weight of an initiator which can be activated by light.

8. An optical glass fibre as claimed in Claim 7, characterized in that the initiator which can be activated by light is selected from the group formed by 2,2-dimethoxy-2-phenyl-acetophenone, 2,2-diethoxy-acetophenone, 2,2-dimethyl-2-hydroxyacetophenone and 2'-(2-oxybenzophenone)-2-ethoxy-ethyl acrylate.

9. An optical glass fibre as claimed in any one of the Claims 1 to 8, characterized in that the curable synthetic resin composition contains up to 20 % by weight of one or more monomeric polyfunctional acrylate compounds.

10. An optical glass fibre as claimed in Claim 9, characterized in that the monomeric polyfunctional acrylate compounds are selected from the group formed by hexane diol diacrylate, trimethylol propane triacrylate and tripropylene glycol diacrylate.

11. A method of manufacturing an optical glass fibre having a cured synthetic resin coating, in which, immediately after its formation, the fibre is enveloped with a layer of a curable synthetic resin composition, which is made to cure by exposure to light or electrons, characterized in that a curable synthetic resin composition as claimed in any one of claims 1 to 10 is applied to the glass fibre after which the curable synthetic resin composition is made to cure by exposing it to radiation for less than 0.5 s.

**Revendications**

1. Fibre optique en verre à revêtement de matière synthétique, comprenant une fibre en verre et une couche enveloppante en un caoutchouc synthétique, ce caoutchouc synthétique étant formé par une composition de matière synthétique durcissable contenant un acrylate d'uréthane oligomère et un acrylate monomère à basse viscosité, caractérisée en ce que la composition de matière synthétique durcissable contient 50 à 95 % en poids d'un acrylate d'uréthane oligomère et 5 à 50 % en poids d'un ou de plusieurs acrylates monomères à basse viscosité, l'acrylate d'uréthane oligomère étant un acrylate de polyuréthane presentant un poids moléculaire moyen supérieur à 3000 et la formule de structure suivante:

$$CH_2{=}CH-\underset{\underset{O}{\|}}{C}-O-R_3-\underset{\underset{O}{\|}}{C}-NH-R_2-NH-\underset{\underset{O}{\|}}{C}-O-R_1-\underset{\underset{O}{\|}}{C}-NH-R_2-NH-\underset{\underset{O}{\|}}{C}-O-R_3-\underset{\underset{O}{\|}}{C}-CH{=}CH_2$$

dans laquelle $R_1$ est choisi dans le groupe formé par des chaînes de polyéther et de polyester présentant un poids moléculaire moyen supérieur à 2500, dans laquelle $R_2$ est un reste bivalent d'un diisocyanate et dans laquelle $R_3$ est un reste bivalent d'un dialcool organique, les acrylates monomères à basse viscosité étant choisis parmi les composés ne presentant qu'un seul groupe d'ester d'acide acrylique par molécule.

2. Fibre optique en verre selon la revendication 1, caractérisée en ce que R est choisi dans le groupe formé par

$$-(CH_2-CH_2-O)_n-,\ -(CH_2-\underset{\underset{CH_3}{\|}}{CH}-O)_n-,\ -(CH_2-CH_2-CH_2-CH_2-O)_n-$$

et

$$-CH_2-CH_2-O\left[\underset{\underset{O}{\|}}{C}-(CH_2)_4-\underset{\underset{O}{\|}}{C}-O-CH_2-CH_2-O\right]_m$$

formules dans lesquelles n est en moyenne supérieur à 90 et dans lesquelles m est en moyenne supérieur à 30.

3. Fibre optique en verre selon la revendication 1 ou 2, caractérisée en ce que $R_2$ est choisi dans le groupe formé par

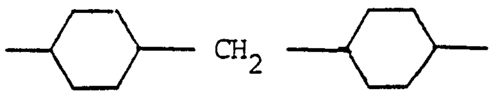

et

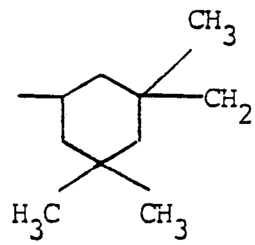

4. Fibre optique en verre selon la revendication 1 ou 2, caractérisée en ce que $R_2$ est choisi dans le groupe formé par

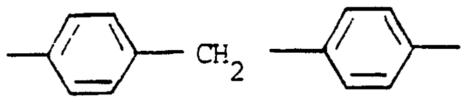

et

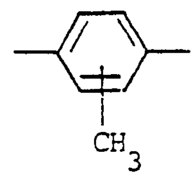

5. Fibre optique en verre selon l'une des revendications 1 à 4, caractérisée en ce que $R_3$ est choisi dans le groupe formé par

$-(CH_2-CH_2-O)_p-$ et 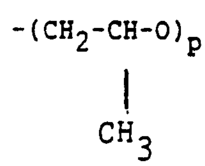

formule dans laquelle p est au moins égal à 1.

6. Fibre optique en verre selon l'une des revendications 1 à 5, caractérisée en ce que les acrylates monomères à basse viscosité sont choisis dans le groupe formé par l'acrylate de 2-éthoxy-éthyle, l'acrylate de 2'-éthoxy2-éthoxyéthyle, l'acrylate de 3-méthoxypropyle, l'acrylate de butyle, l'acrylate de pentyle, l'acrylate d'hexyle, l'acrylate d'heptyle, l'acrylate d'octyle, l'acrylate de nonyle, l'acrylate de 2-éthylhexyle, l'acrylate de 2-phénoxyéthyle et l'acrylate de 2'-(2-oxybenzophénon)-2-éthoxyéthyle.

7. Fibre optique en verre selon l'une des revendications 1 à 6, caractérisée en ce que la composition de matière synthétique durcissable contient en outre 0,1 à 10 en poids d'un initiateur pouvant être activé par de la lumière.

8. Fibre optique en verre selon la revendication 7, caractérisé en ce que l'initiateur pouvant être activé par de la lumière est choisi dans le groupe constitué par la 2,-2'diméthoxy-2-phénylacétophénone, la 2,2-diéthoxyacétophénone, la 2,2-diméthyl-2-hydroxyacétophénone et l'acrylate de 2'-(2-oxybenzophénon)-2-éthoxyéthyle.

9. Fibre optique en verre selon l'une des revendications 1 à 8, caractérisée en ce que la composition de matière synthétique durcissable contient jusqu'à 20 % en poids d'un ou de plusieurs composés d'acrylates multiples monomères.

10. Fibre optique en verre selon la revendication 9, caractérisée en ce que les composés d'acrylates multiples monomères sont choisis dans le groupe formé par le diacrylate d'hexanediol, le triacrylate de triméthylolpropane et le diacrylate de tripropylène glycol.

11. Procédé pour la réalisation d'une fibre optique en verre comportant un revêtement en matière synthétique durcissable selon lequel une fibre en verre est enveloppée, immédiatement après sa formation, d'une couche en une composition de matière synthétique durcissable et ensuite portée à durcissement par irradiation par de la lumière ou par des électrons, caractérisé en ce qu'une composition de matière synthétique durcissable selon l'une des revendications 1 à 10 est appliquée sur la fibre en verre, après quoi la composition de matière synthétique durcissable est portée à durcissement par irradiation pendant une durée inférieure à 0,5 seconde.

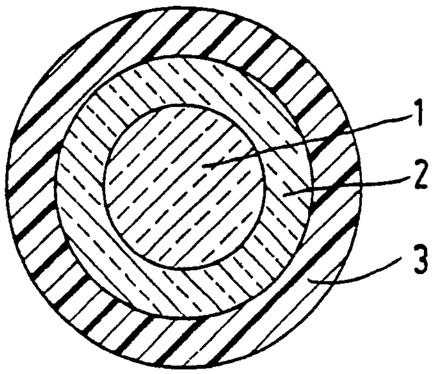


FIG. 1

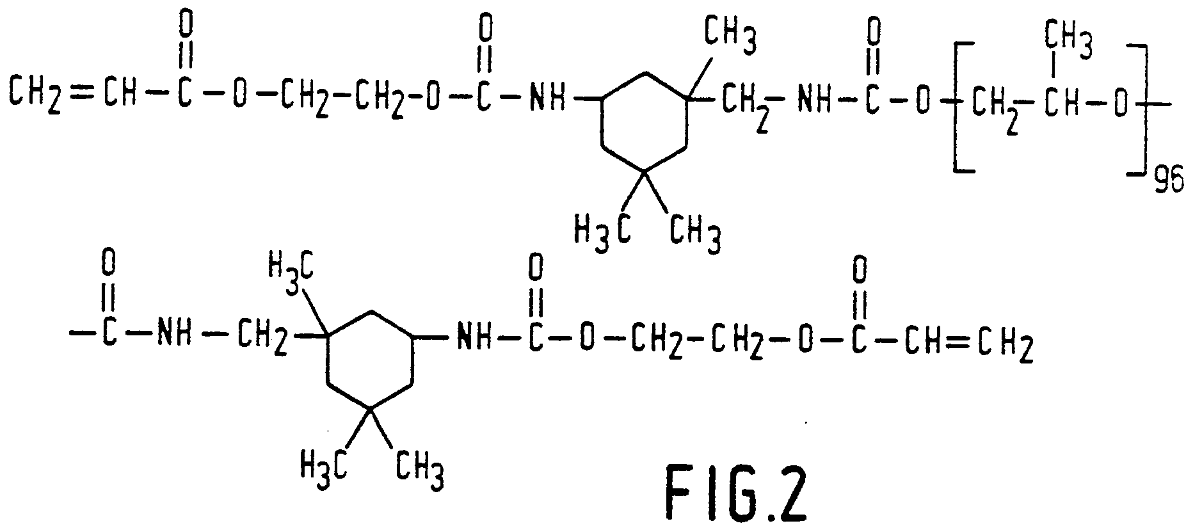

FIG. 2

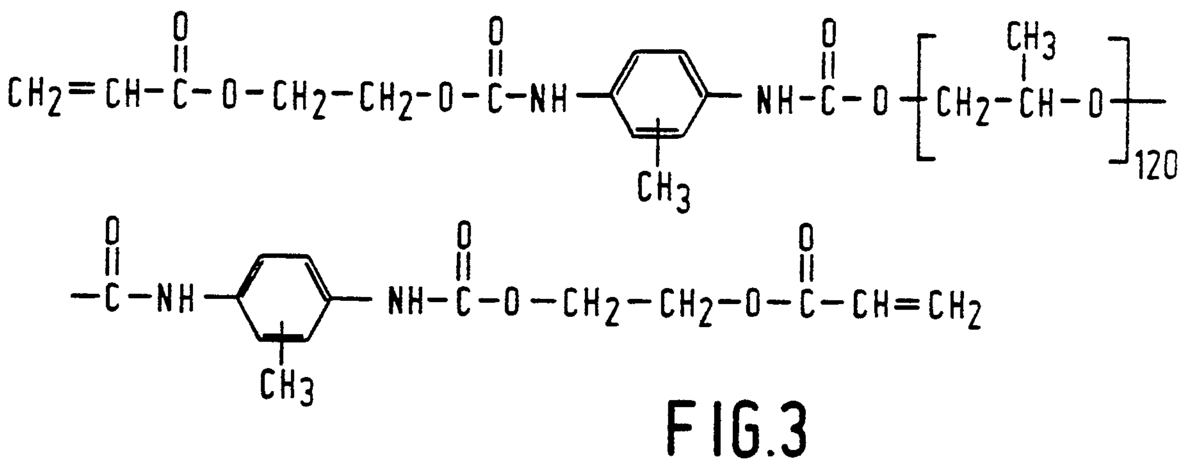

FIG. 3

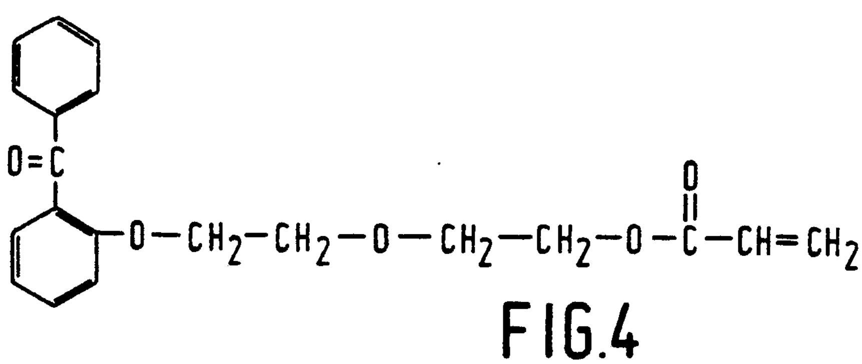

FIG. 4